# EUROPEAN PATENT APPLICATION

(11) **EP 1 744 576 A1**
(43) Date of publication of application: **17.01.2007**
(21) Application number: 04731463.8
(22) Date of filing: 06.05.2004
(51) Int. Cl.: H04Q 7/34

(54) **MOBILE TERMINAL, SERVER, INFORMATION PROVIDING SYSTEM, COMMUNICATION METHOD OF MOBILE TERMINAL, COMMUNICATION METHOD OF SERVER, AND INFORMATION PROVIDING METHOD OF INFORMATION PROVIDING SYSTEM**

(71) Applicant: MITSUBISHI DENKI KABUSHIKI KAISHA, Chiyoda-ku, Tokyo 100-8310 (JP)
(72) Inventor: YAMAGUCHI, Tomohisa, c/o Mitsubishi Denki K. K., Tokyo 100-8310 (JP); TAKATORI, Norihito, c/o Mitsubishi Denki K. K., Tokyo 100-8310 (JP)
(74) Representative: Pfenning, Meinig & Partner GbR
(86) International application number: PCT/JP2004/005964
(87) International publication number: WO 2005/109933

(57) **Abstract**

In a context grasping system of the present invention, a GPS mobile phone 2 which can extract location data of itself and a server 19 which provides information based on context of the GPS mobile phone 2 are connected to a network 1, the GPS mobile phone 2 sends the extracted location data to the server 19, the server 19 extracts context of the GPS mobile phone 2 based on geographic information corresponding to the sent location data and location information computable from the successively sent location data, the server 19 sends notification frequency of the location data corresponding to the context to the GPS mobile phone 2, the GPS mobile phone 2 sends the location data at the sent notification frequency afterwards, and the server 19 determines providing information, a providing method, and a providing destination based on the context and provides the information.

## Description

### Technical Field

The present invention relates to an information providing system providing information from a server based on status of a mobile terminal. In particular, it relates to a system that reduces the load of the server by decreasing the number of communication from the mobile terminal to the server.

### Background Art

As a conventional art related context grasping for grasping status (context) of a mobile terminal, JP2001-84269 discloses the technique. JP2001-84269 discloses a system which efficiently collects information related context.
Patent Document 1: JP2001-84269

### Disclosure of the Invention

### Problems to be Solved by the Invention

According to a conventional art, data such as location information sent from a mobile terminal is transmitted to a server, and the server grasps its context. However, this transmission of the data used for grasping the context is not carried out at a frequency suitable to status of the mobile terminal. Consequently, essentially unnecessary data might be transmitted according to the status of the mobile terminal, which increases load of the server and communication costs.

The present invention aims to control notification frequency of the data according to the status of the mobile terminal and to reduce load of the server and increasing network costs.

Further, it is an object to grasp the context according to the status of the mobile terminal and to deliver suitable information based on the context.

### Means to Solve the Problems

According to the present invention, a mobile terminal communicating with a server includes:
a location data obtaining unit obtaining location data;
a notification frequency memory storing notification frequency;
a terminal communicating unit communicating with the server;
a terminal controlling unit receiving the notification frequency from the server by the terminal communicating unit, updating the notification frequency stored in the notification frequency memory, and sending the location data obtained by the location data obtaining unit to the server at the notification frequency stored in the notification frequency memory by the terminal communicating unit.

According to the present invention, a server communicating with a mobile terminal includes:
a server communicating unit receiving location data of the mobile terminal;
a terminal status grasping unit grasping status of the mobile terminal using the location data of the mobile terminal received by the server communicating unit;
a providing information obtaining unit obtaining notification frequency to be provided to the mobile terminal based on the status of the mobile terminal grasped by the terminal status grasping unit; and
a notification frequency sending unit sending the notification frequency obtained by the providing information obtaining unit to the mobile terminal.

The terminal status grasping unit includes:
a history storing unit storing a history of location data of a mobile terminal;
a location information computing unit obtaining a moving speed and moving direction of the mobile terminal as location information using the history of the location data of the mobile terminal:
   a geographic information obtaining unit searching a geographic information database storing geographic information using the location data of the mobile terminal received by the server communicating unit, and obtaining geographic information of a place where the mobile terminal exists; and
   a context obtaining unit obtaining context of the mobile terminal by searching a context database storing status of the mobile terminal as context using the location information computed by the location information computing unit and the geographic information obtained by the geographic information obtaining unit, and outputting as status of the mobile terminal.

According to the present invention, in an information providing system, in which a server and a mobile terminal communicate, and the server provides information to the mobile terminal,
the mobile terminal includes:
a location data obtaining unit obtaining location data;
a notification frequency memory storing notification frequency;
a terminal communicating unit communicating with the server; and
a terminal controlling unit receiving the notification frequency from the server by the terminal communicating unit, updating the notification frequency stored in the notification frequency memory, sending the location data obtained by the location data obtaining unit at the notification frequency stored in the notification frequency memory to the server by the terminal communicating unit, and receiving information provided from the server by the terminal communicating unit, and
the server includes:
   a server communicating unit receiving the location data of the mobile terminal:
      a terminal status grasping unit grasping status of the mobile terminal using the location data of the mobile terminal received by the server communicating unit;
      a providing information obtaining unit obtaining information and notification frequency to be provided to the mobile terminal based on the status of the mobile terminal grasped by the terminal status grasping unit;
      a notification frequency sending unit sending the notification frequency obtained by the providing information obtaining unit to the mobile terminal; and
      an information delivering unit delivering the information obtained by the providing information obtaining unit.

The mobile terminal further includes:
a history storing unit storing a history of the location data of the mobile terminal; and
a location information computing unit obtaining a moving speed and moving direction of the mobile terminal as location information by the history of the location data of the mobile terminal, and
the terminal controlling unit sends the location information to the server.

The mobile terminal further includes
an information delivery gateway unit delivering the information provided from the server received by the terminal communicating unit to other mobile terminal.

The server further includes
a group managing unit grouping a plurality of mobile terminals in a same status, setting one mobile terminal out of the plurality of mobile terminals in the same group as an information delivery gateway delivering the information to other mobile terminals, and notifying the other mobile terminals of the one mobile terminal as the information delivery gateway.

According to the present invention, a mobile terminal communicating with a server includes:
a location data obtaining unit obtaining location data;
a terminal status grasping unit grasping status of the mobile terminal using the location data obtained by the location data obtaining unit;
a terminal communicating unit communicating with the server; and
a terminal controlling unit receiving providing information provided from the server by the terminal communicating unit, selecting and utilizing providing information that suits the status of the mobile terminal grasped by the terminal status grasping unit out of the providing information.

According to the present invention, a server communicating with a mobile terminal includes:
a geographic information obtaining unit searching a geographic information database storing geographic information, and obtaining geographic information;
a context obtaining unit searching a context database storing status of the mobile terminal as context using the geographic information obtained by the geographic information obtaining unit, obtaining context of the mobile terminal, and outputting as the status of the mobile terminal;
a providing information obtaining unit obtaining information to be provided to the mobile terminal based on the status of the mobile terminal obtained by the context obtaining unit; and
an information delivering unit delivering the information obtained by the providing information obtaining unit.

According to the present invention, in an information providing system, in which a server and a mobile terminal communicate and the server provides information to the mobile terminal,
the mobile terminal includes:
a location data obtaining unit obtaining location data;
a terminal status grasping unit grasping status of the mobile terminal using the location data obtained by the location data obtaining unit;
a terminal communicating unit communicating with the server; and
a terminal controlling unit receiving providing information provided from the server by the terminal communicating unit, selecting and utilizing providing information that suits the status of the mobile terminal grasped by the terminal status grasping unit out of the providing information, and
the server includes:
   a geographic information obtaining unit searching a geographic information database storing geographic information, and obtaining geographic information;
   a context obtaining unit searching a context database storing status of the mobile terminal as context using the geographic information obtained by the geographic information obtaining unit, obtaining context of the mobile terminal, and outputting as the status of the mobile terminal;
   a providing information obtaining unit obtaining information to be provided to the mobile terminal based on the status of the mobile terminal obtained by the context obtaining unit; and
   an information delivering unit delivering the information obtained by the providing information obtaining unit.

According to the present invention, a communicating method of a mobile terminal communicating with a server includes:
obtaining location data;
storing notification frequency in a notification frequency memory;
receiving the notification frequency from the server, updating the notification frequency stored in the notification frequency memory, and
sending the location data obtained to the server at the notification frequency stored in the notification frequency memory.

According to the present invention, a communicating method of a server communicating with a mobile terminal includes:
receiving location data of the mobile terminal;
grasping status of the mobile terminal using the location data of the mobile terminal received;
obtaining notification frequency to be provided to the mobile terminal based on the status of the mobile terminal grasped; and
sending the notification frequency obtained to the mobile terminal.

According to the present invention, an information providing method of an information providing system, in which a server and a mobile terminal communicate and the server provides information to the mobile terminal, the method includes:
by the mobile terminal,
obtaining location data;
storing notification frequency in a notification frequency memory;
receiving the notification frequency from the server, updating the notification frequency stored in the notification frequency memory; and
sending the location data obtained to the server at the notification frequency stored in the notification frequency memory, and
by the server,
receiving the location data of the mobile terminal:
   grasping status of the mobile terminal using the location data of the mobile terminal received;
   obtaining information and notification frequency to be provided to the mobile terminal based on the status of the mobile terminal grasped;
   sending the notification frequency obtained to the mobile terminal; and
   delivering the information obtained to the mobile terminal.

According to the present invention, a communicating method of a mobile terminal communicating with a server includes:
obtaining location data;
grasping status of the mobile terminal using the location data obtained;
receiving providing information provided from the server, selecting and utilizing providing information that suits the status of the mobile terminal grasped out of the providing information.

According to the present invention, a communicating method of a server communicating with a mobile terminal includes:
searching a geographic information database storing geographic information, and obtaining geographic information;
searching a context database storing status of the mobile terminal as context using the geographic information obtained, and obtaining context of the mobile terminal as the status of the mobile terminal;
obtaining information to be provided to the mobile terminal based on the status of the mobile terminal obtained; and
delivering the information obtained.

An information providing method of an information providing system, in which a server and a mobile terminal communicate and the server provides information to the mobile terminal, the method includes:
by the mobile terminal,
obtaining location data;
grasping status of the mobile terminal using the location data obtained; and
receiving providing information provided from the server, selecting and utilizing providing information that suits the status of the mobile terminal grasped out of the providing information, and
by the server,
searching a geographic information database storing geographic information, and obtaining geographic information;
searching a context database storing status of the mobile terminal as context using the geographic information obtained, and obtaining context of the mobile terminal as the status of the mobile terminal;
obtaining information to be provided to the mobile terminal based on the status of the mobile terminal obtained; and
delivering the information obtained.

### Preferred Embodiments for Carrying out the Invention

Hereinafter, as an example of information providing system of the present invention, an embodiment will be explained using a context grasping system with reference to the figures.

### Embodiment 1.

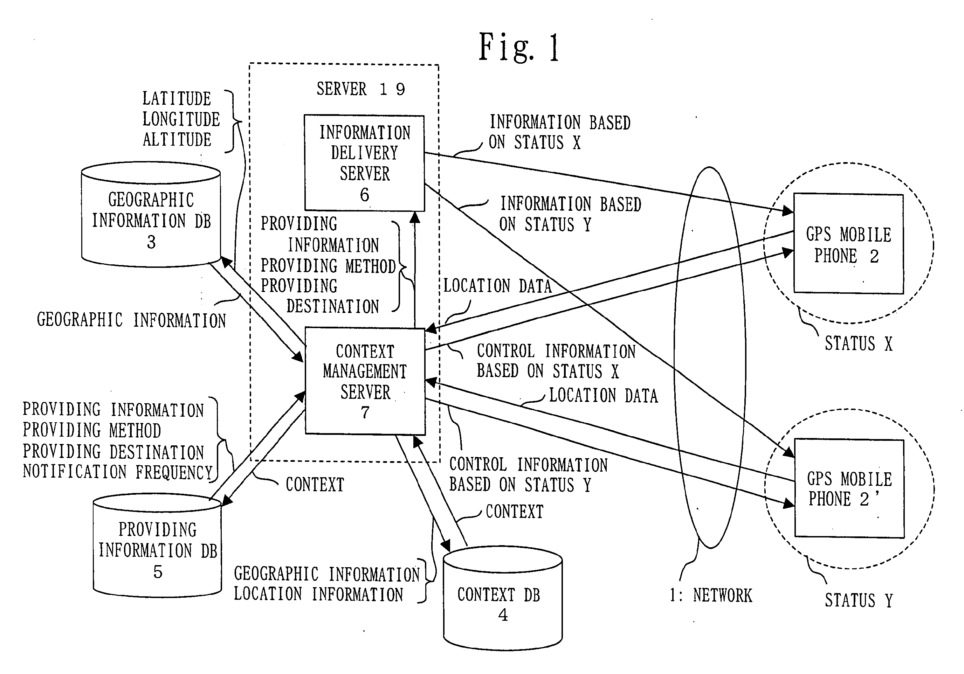

Fig. 1 shows a configuration of the context grasping system according to the first embodiment of the invention.

A network 1 connects a GPS mobile phone 2 and a GPS mobile phone 2'. Mounting a GPS (Global Positioning System) positioning device, the GPS mobile phones 2 and 2' can extract the location of themselves, and further can notify their location as location data to a specific server connected to the network 1. Hereinafter, between the GPS mobile phone 2 and the GPS mobile phone 2', the GPS mobile phone 2 is simply used when there is no need to distinguish the two.

In the present embodiment, although the GPS mobile phone 2 extracts its location using the GPS, any method can be employed as long as the GPS mobile phone 2 can extract its location such as extracting its location using a location of a base station communicated with.

Further, it is possible to obtain higher-precision location data by combining the above extracted location data with high-precision correction data sent from a server (not shown) connected to the network.

Further, the present embodiment will be explained using the GPS mobile phone as a terminal; however, it is applicable to various mobile terminals such as a normal mobile phone, a PDA (Personal Digital Assistance), a notebook PC (Personal Computer), and an in-vehicle information terminal.

A geographic information database 3 is a database from which geographic information (roads, buildings, etc.) can be extracted based on latitude, longitude, and altitude to specify a certain place. Here, although altitude is included to make the information more precise, it is sufficient to extract the geographic information using only latitude and longitude, or using another information.

From a context database 4, context can be extracted based on location information and geographic information.

Here, context means status surrounding an object graspable by physical means such as a sensor and a database. For example, the context is information related to situation or status such as behavior, action, interest, motion, circumstance, and environment of a user of the mobile terminal. Concretely, the context means information showing "moving by car at 50km/h," "walking on sidewalk of a shopping street," "dining at a restaurant," etc.

Location data means data showing location itself such as latitude, longitude, and aptitude.

Location information means location data and data obtainable from computation using location data. Data obtainable from location data means moving direction, a moving speed, acceleration, etc. which are computed using a time or a time period from successive data of location itself.

Geographic information means data showing a certain point such as a road and a building. Further, geographic information includes data showing a much broader range such as a prefecture, a district, a state, and a country.

A providing information database 5 is a database storing providing information, a providing method, a providing destination, and notification frequency corresponding to context.

An information delivery server 6 is a server delivering providing information to a providing destination by a providing method specified.

A context management server 7 is a server which manages delivering process of information based on context of a GPS mobile phone using location data sent from the GPS mobile phone 2, various databases, and the information delivery server 6.

Here, the information delivery server 6 and the context management server 7 can be implemented by different machines, and also by the same machines. In Fig. 1, the information delivery server 6 and the context management server 7 are combined to form a server 19. Hereinafter, the information delivery server 6 and the context management server 7 are also called unitedly as the server 19.

Further, each of the databases 3, 4, and 5 can be directly connected to the context management server 7, or can be connected to the network 1.

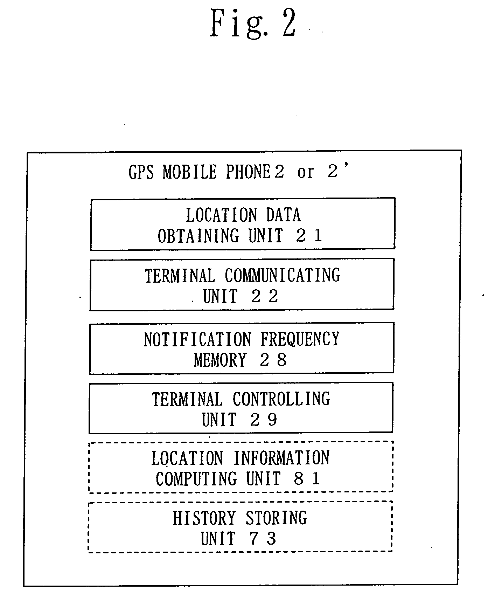

Fig. 2 shows a configuration of the GPS mobile phone 2 according to the present embodiment.

A location data obtaining unit 21 extracts its location using a GPS positioning device.

A terminal communicating unit 22 carries out communication with instruments connected to the network 1.

A notification frequency memory 28 is a memory unit storing a frequency of sending its location.

A terminal controlling unit 29 controls the operation of the GPS mobile phone 2.

Further, not shown in the figure, the GPS mobile phone 2 includes interface providing information from the information delivery server 6 to functions of the mobile phone and objects of using the mobile phone (such as a user using the mobile phone, devices connected to the mobile phone, etc.). Interface is, for example, a display unit, a speaker, and an information transmission device, etc.

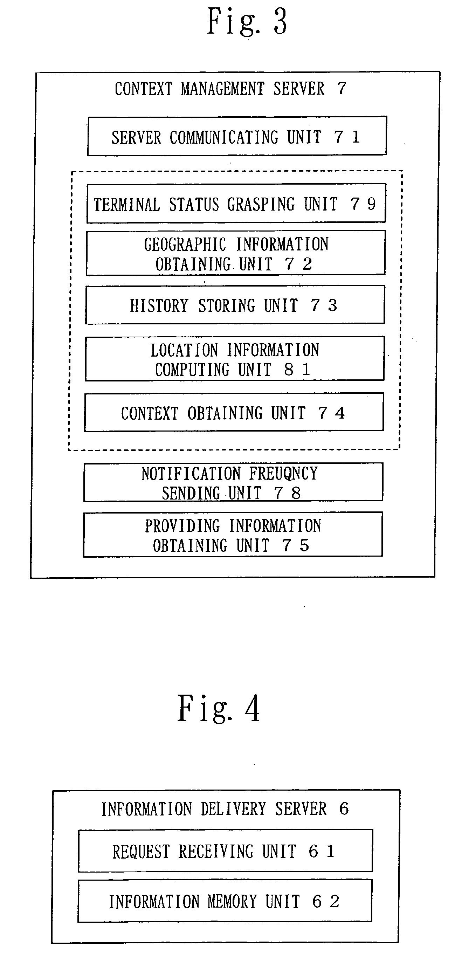

Fig. 3 shows a configuration of the context management server 7 according to the present embodiment.

A server communicating unit 71 carries out communication with instruments connected to the network 1.

A terminal status grasping unit 79 grasps status of the GPS mobile phone 2. The terminal status grasping unit 79 grasps, for example, status whether (the user of) the GPS mobile phone 2 stands still, moves by train, or moves on sidewalk, etc.

In order to grasp status of the GPS mobile phone 2, the terminal status grasping unit 79 is provided with a geographic information obtaining unit 72, a history storing unit 73, a location information computing unit 81, and a context obtaining unit 74 as will be described below.

The geographic information obtaining unit 72 extracts geographic information from the geographic information database 3 using location data sent from the GPS mobile phone 2.

The location information computing unit 81 computes location information such as moving direction, a moving speed, acceleration using a time and a time period from successive location data.

The history storing unit 73 stores history of various information such as location data, geographic data, location information, context, notification frequency of the GPS mobile phone 2.

The context obtaining unit 74 extracts context from the context database 4 using the geographic information and the location information.

A notification frequency sending unit 78 sends notification frequency to the GPS mobile phone 2.

A providing information obtaining unit 75 extracts providing information, a providing method, a providing destination, and notification frequency from the providing information database 5 using context.

Fig. 4 shows a configuration of the information delivery server 6 according to the present embodiment.

A request receiving unit 61 receives delivery request of providing information from the context management server 7.

An information delivering unit 62 delivers providing information to a providing destination by a providing method specified.

Fig. 5 shows an example of history data stored in the history storing unit 73 such as the acceleration.

The history storing unit 73 stores the following data.

1. terminal ID: an identifier of the GPS mobile phone 2
2. time: time of receiving from the GPS mobile phone 2
3. location data: location (longitude X, latitude Y, and altitude Z) of the GPS mobile phone 2
4. location information: moving direction, a moving speed, acceleration, etc. of the GPS mobile phone 2
5. geographic information: a place and a building (inside the building, inside a park, on a sidewalk in a downtown, etc.) where the GPS mobile phone 2 stays
6. context: status of (the user of) the GPS mobile phone 2 (walking, shopping, dining, commuting, etc.)
7. notification frequency: frequency of notifying the server specified to the GPS mobile phone 2
The GPS mobile phone 2, the context management server 7, and the information delivery server 6 of the present embodiment are configured as described above.

Hereinafter, implementing procedure will be explained for controlling a notification frequency of location data sent from the GPS mobile phone 2 according to the context of the GPS mobile phone, reducing the load of the server and the network, and provides information based on the context of the GPS mobile phone.

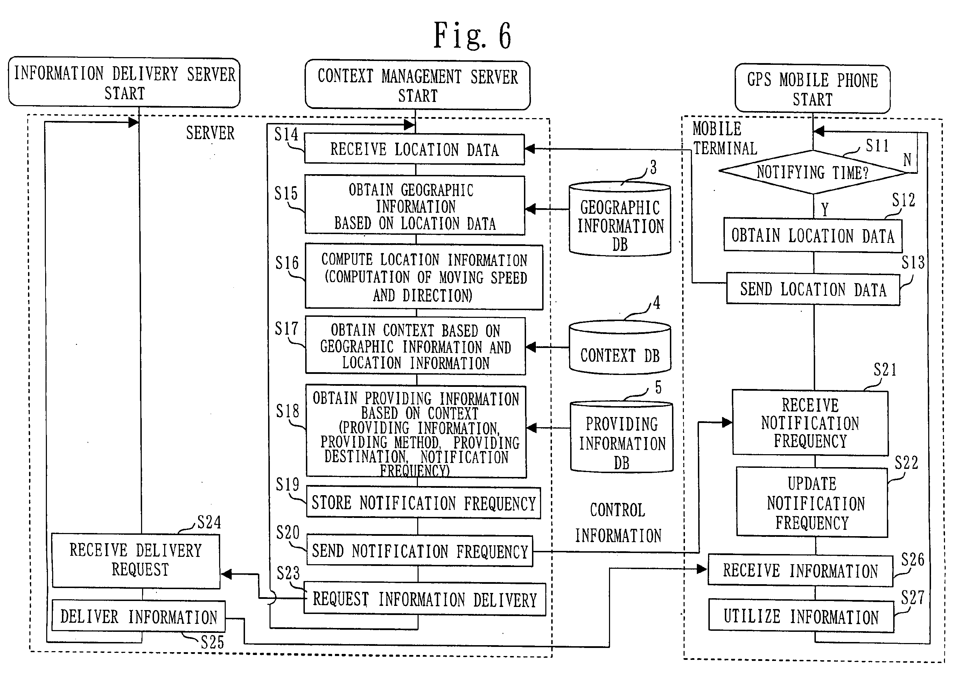

Fig. 6 is an operational flow chart of the GPS mobile phone 2, the context management server 7 and the information delivery server 6.

First, the terminal controlling unit 29 of the GPS mobile phone 2 checks if it is a notifying time which corresponds to the notification frequency of the notification frequency memory 28 or not (S11), and if it is the notifying time, the terminal controlling unit 29 extracts location data of the location of itself using the location data obtaining unit 21 (S12).

The terminal controlling unit 29 sends the extracted location data to the context management server 7 through the network 1 at a current notification frequency by the terminal communicating unit 22 (S13). For example, the location data (longitude X, latitude Y, and altitude Z) of the GPS mobile phone 2 is sent.

Here, if control information of changing the notification frequency has not been sent from the context management server 7 as of present, a default notification frequency of the notification frequency memory 28 is used.

Further, although a timing for extracting the location data of the location data obtaining unit 21 is not particularly specified, it is preferable to extract at a timing of the notifying time corresponding to the current notification frequency as shown in Fig. 6.

Next, the context management server 7 receives the location data (longitude X, latitude Y, and altitude Z) sent from the GPS mobile phone 2 by the server communicating unit 71 (S14).

The geographic information obtaining unit 72 of the context management server 7 extracts geographic information from the geographic information database 3 using this location data (longitude X, latitude Y, and altitude Z) as a key.

As a result, the location where the GPS mobile phone 2 stays is found: such as in a building, in a park, on a sidewalk in a downtown.

Moreover, the geographic information obtaining unit 72 stores the location data of the GPS mobile phone 2 and the extracted geographic information using the history storing unit 73.

The location information computing unit 81 computes location information such as a moving speed, moving direction, etc. of the GPS mobile phone 2 based on next location data that will be sent at the current notification frequency and the location data stored in the history storing unit 73, and stores the computed result using the history storing unit 73 (S16).

Here, although the location information is computed based on the location data by the location information computing unit 81 of the context management server 7, it is also possible to compute the location information at the GPS mobile phone 2 by installing a similar function to the location information computing unit 81 and the history storing unit 73 of the context management server 7 and to send the location information to the context management server 7 together with the location data as shown by a broken line in Fig. 2. In this case, the computation of the location information at the context management server 7 is unnecessary, and thus the load of the context management server 7 can be reduced.

Further, it is also possible to store the location data in the GPS mobile phone 2 to some extent, compress the stored location data at a timing of the notification frequency, and send to the context management server 7. In this case, it is necessary to include a location data compressing unit (not shown in the figure) in the GPS mobile phone 2 and a location data decompressing unit (not shown in the figure) in the context management server 7, and the load of the network can be reduced.

Next, the context obtaining unit 74 of the context management server 7 extracts the context from the context database 4 using the geographic information and the location information as a key, and stores the extracted context using the history storing unit 73 (S17).

Here, the context database 4 stores such context that shows if the geographic information is "on street", and the location information shows that the moving direction is parallel to the street and the speed is 50km, it is "riding a car" as a simple example.

Further, here, although the context is extracted from the context database 4 using the geographic information and the location information as a key, in addition to these, the location data and the context stored using the history storing unit 73 can be also used for extracting the context. Further, it is also possible to extract another context using the searched context. Yet further, it is also possible to extract context using personal information from a personal database (not shown in the figure). For example, an age, sex, hobby, special skills, etc. are recorded in the personal database, and by extracting context using these, it is possible to estimate status of the user more properly.

Moreover, at this time, if the location data is so precise that an error in the location data is some-cm to some-10cm, it is possible to extract the following status as context from the context database 4.
● Example 1 If the geographic information is "on station platform", further at a boarding position of an up train on the platform, and the location information is "still", the status is "about to board an up train"
● Example 2 If the geographic information is "downtown", the location information shows "at a speed of walking slowly" as the speed and "repeatedly move and stop", and further the geographic information of the location to stop is "close to a boutique on a sidewalk (when products are displayed through the window)", the status is "window-shopping of clothes".

Next, the providing information obtaining unit 75 of the context management server 7 extracts providing information, a providing method, a providing destination, notification frequency from the providing information database 5 using the extracted context as a key (S18).

The providing information obtaining unit 75 stores the notification frequency extracted from the providing information database 5 in the history storing unit 73 (S19).

Here, although the notification frequency is extracted from the providing information database 5, the providing information obtaining unit 75 can also decide the notification frequency based on the context and the providing information.

The notification frequency sending unit 78 compares the notification frequency extracted from the providing information database 5 and the notification frequency stored in the history storing unit 73, and when these are different, the notification frequency sending unit 78 sends control information to the GPS mobile phone 2 by the server communicating unit 71 to update the notification frequency (S20).

Here, the notification frequency is stored in the history storing unit 73, compared with the newly extracted notification frequency, and only when the compared result is different, sent to the GPS mobile phone 2. The notification frequency, however, can be sent each time without being stored in the history storing unit 73.

Here, the following shows the notification frequency according to the context in cases of examples described above:

### ● case of Example 1

Since it stays still at present, and can be estimated to move by riding a train, the notification frequency is set to less than present.

### ● case of Example 2

At present it repeatedly moves and stops; however, it is unclear if it does the current motion continuously or moves to another motion, the notification frequency is set to the same as the present.

The terminal communicating unit 22 of the GPS mobile phone 2 receives control information from the notification frequency sending unit 78 of the context management server 7 (S21). Further, the GPS mobile phone 2 checks the received control information, judges this to be change of the notification frequency, and changes the notification frequency of the notification frequency memory 28 according to the judged result (S22).

On the other hand, the context management server 7 requests the information delivery server 6 to carry out information delivery by specifying contents of the providing information, the providing method, and the providing destination which have been previously extracted (S23).

Here, the following shows the providing information, the providing method, and the providing destination according to the context in cases of the above discussed examples:

### ● case of Example 1

The providing information should be information related to upward direction (running status of train, events in the area where up train goes, etc.), the providing method should be a unicast delivery, and the providing destination should be the terminal which has sent the location data.

### ● case of Example 2

The providing information should be information related to boutiques (shop information, bargain information, etc.), the providing method should be a unicast delivery, and the providing destination should be the terminal which has sent the location data.

Next, the request receiving unit 61 of the information delivery server 6 receives information delivery request from the context management server 7 (S24).

The information delivering unit 62 delivers information according to contents requested by the context management server 7 (S25).

The terminal communicating unit 22 of the GPS mobile phone 2 receives the information sent by the information delivering unit 62 of the information delivery server 6 (S26).

Further, the terminal controlling unit 29 of the GPS mobile phone 2 checks the received information, judges that this is the information based on the status, and according to the judged result, provides the user object with the information (S27).

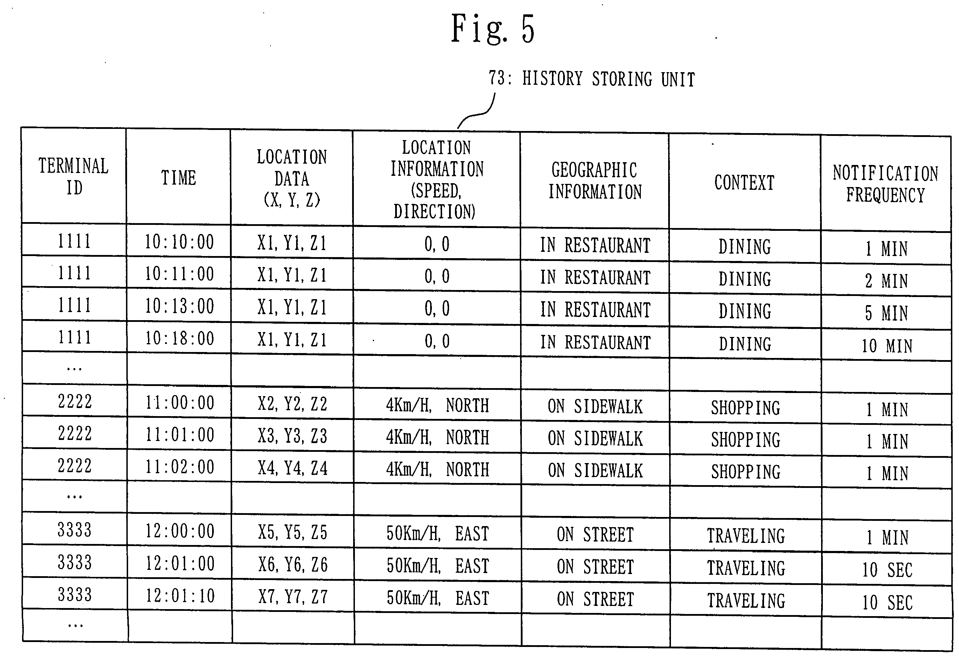

An example of history result of the context grasping system according to the present embodiment will be explained by referring to Fig. 5.

The obtained geographic information for the GPS mobile phone having the terminal ID of 1111 is "restaurant", and the GPS mobile phone is not moving, so that it is estimated that the user is "dining in a restaurant" as context. Then, the notification frequency is set to 1 minute, 2 minutes, 5 minutes, and 10 minutes, by gradually increasing its intervals. In this way, notification to the server from the GPS mobile phone becomes a half, one-fifth, and one-tenth, which reduces the load of the server. The user does not need the information from the server, since the user is dining in the restaurant.

The obtained geographic information for the GPS mobile phone having the terminal ID of 2222 is "sidewalk" and is moving at 4km per hour, so that it is estimated that the user is "walking" as context. Then, the notification frequency remains 1 minute. The information is delivered to the user every minute.

The obtained geographic information for the GPS mobile phone having the terminal ID of 3333 is "street" and is moving at 50km per hour, so that it is estimated that the user is "moving by car" as context. Then, the notification frequency is set to 6 times. The information is delivered to the user every 10 seconds.

In the above way, the notification frequency of data is controlled according to the context, the increase of the load of the server and network cost can be reduced, the context can be grasped, and appropriate information can be delivered based on the context.

As has been discussed, the context grasping system according to the present embodiment is a system in which the GPS mobile phone 2 that is able to extract its location data and the server 19 that provides information based on the context of the GPS mobile phone 2 are connected to the network 1.

Then, the GPS mobile phone 2 in the context grasping system of the present embodiment is characterized in that the GPS mobile phone 2 sends the extracted location data to the server 19, the server 19 extracts context of the GPS mobile phone 2 based on geographic information corresponding to the sent location data and location information computable from the successively sent location data, the server 19 sends notification frequency of the location data corresponding to the context to the GPS mobile phone 2, the GPS mobile phone 2 sends the location data at the sent notification frequency afterwards, and the server 19 determines providing information, a providing method, and a providing destination based on the context and provides the information.

Or, the context grasping system of the present embodiment is characterized in that the GPS mobile phone 2 computes the location information from the location data that is extracted successively, sends the extracted location data and the computed location information to the server 19, the server 19 extracts the context of the GPS mobile phone 2 based on the geographic information corresponding to the sent location data and the sent location information.

Further, the present embodiment is characterized in that the server 19 stores the notification frequency, and sends it to the GPS mobile phone 2 only when the notification frequency stored differs from the notification frequency corresponding to the context.

Further, the present embodiment is characterized in that the extraction of the location data of the GPS mobile phone 2 is carried out at timings of the notifying time corresponding to the notification frequency.

Further, the present embodiment is characterized in that the data sent from the GPS mobile phone 2 to the server 19 is compressed data of a set of plural pieces of location data corresponding to the notification frequency or a set of the location data and the location information.

Further, the present embodiment is characterized in that geographic information, context, providing information, a providing method, a providing destination, and notification information are extracted from the databases connected to the server 19.

Further, the present embodiment is characterized in that geographic information, context, providing information, a providing method, a providing destination, and notification information are extracted from the databases connected to a network.

Further, the present embodiment is characterized in that location data is extracted by the GPS.

Further, the present embodiment is characterized in that location data is extracted using the location from the base station.

Further, the present embodiment is characterized in that higher-precision location data can be obtained by combining the extracted location data and high-precision correction data that is sent through the network.

Further, the present embodiment is characterized in that location data, geographic information, location information, and context are stored, and upon extraction of the context, context can be extracted based on the stored information in addition to the geographic information and the location information.

Further, the present embodiment is characterized in that the GPS mobile phone 2 is a mobile phone, a PDA, a notebook PC, or an in-vehicle terminal.

### Embodiment 2.

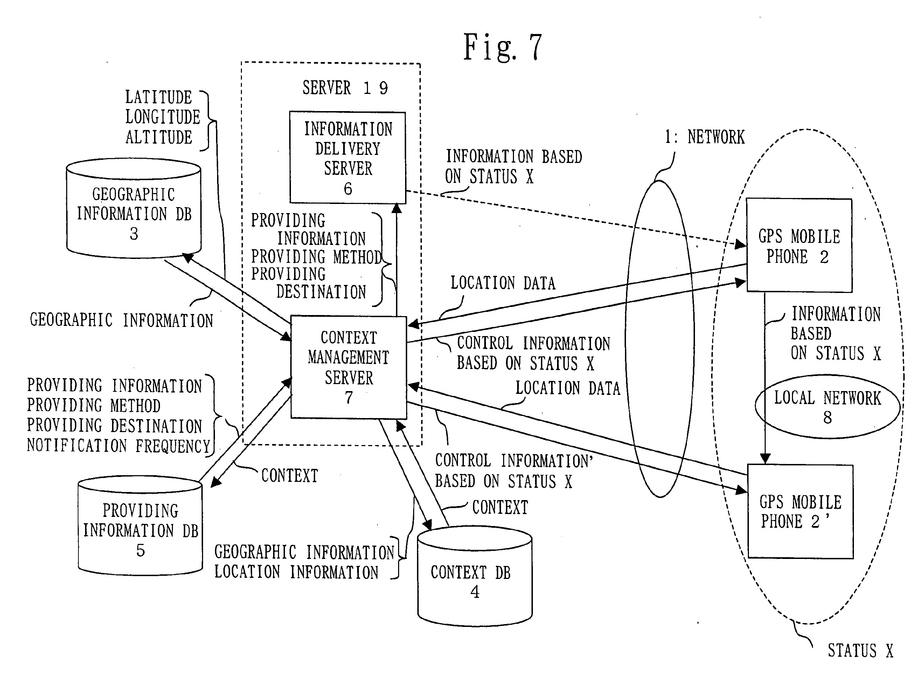

Fig. 7 shows a configuration of a context grasping system according to the second embodiment of the invention.

In Fig. 7, a network 1 through a context management server 7 are the same as ones in the first embodiment.

In the second embodiment, different points from the first embodiment will be mainly explained.

A local network 8 is a network connecting GPS mobile phones. Here, the local network 8 can be a network which uses an access point such as a wireless LAN (Local Area Network), a network which is independently structured such as an adhoc network, or a network which covers wider area; that is, any network can be applied in which plural GPS mobile phones 2 having the same status can communicate.

The system configuration shown in Fig. 7 is the same with the first embodiment except that plural GPS mobile phones 2 exist in the same status.

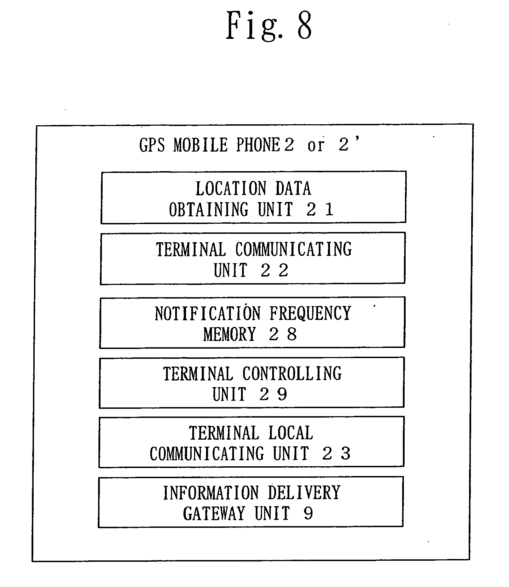

Fig. 8 shows a configuration of the GPS mobile phone 2 according to the present embodiment.

A location data obtaining unit 21, a terminal communicating unit 22, a notification frequency memory 28, and a terminal controlling unit 29 in Fig. 8 are the same as ones of the first embodiment.

A terminal local communicating unit 23 communicates the GPS mobile phone 2 connected to the local network 8.

An information delivery gateway unit 9 delivers information received from the information delivery server 6 to the GPS mobile phone 2 connected to the local network 8.

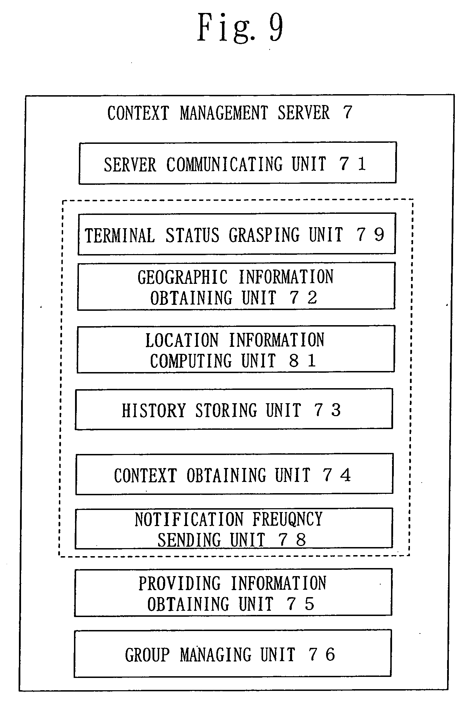

Fig. 9 shows a configuration of the context management server 7 according to the present embodiment.

In Fig. 9, a server communicating unit 71 through a providing information obtaining unit 75, a notification frequency sending unit 78, a terminal status grasping unit 79, and a location information computing unit 81 are the same with ones in the first embodiment.

The configuration of the present embodiment is as discussed above.

In the following, a case will be explained, in which notification frequency of location data sent from a GPS mobile phone is controlled according to context of the GPS mobile phone.

Here, an implementing procedure for providing information based on the context of the GPS mobile phone and for reducing the load of the server and the network will be explained in case where plural GPS mobile phones exist in the same status, one of them is set as a gateway, information is sent to only the gateway, and the information is delivered to the other GPS mobile phones from the gateway.

First, the GPS mobile phone 2 extracts its location data by the location data obtaining unit 21.

Further, the extracted location data is sent to the context management server 7 through the network 1 by the terminal communicating unit 22 at the current notification frequency.

Here, if control information to change the notification frequency has not been sent from the context management server 7, default notification frequency is used.

Further, the GPS mobile phone 2' also carries out the above process as well as the GPS mobile phone 2.

Next, the context management server 7 receives the location data sent from the GPS mobile phone 2 and the GPS mobile phone 2' using the server communicating unit 71. The context management server 7 extracts respective geographic information from the geographic information database 3 using respective location data as a key by the geographic information obtaining unit 72.

Further, the context management server 7 stores the location data of the GPS mobile phone 2 and the GPS mobile phone 2' and the extracted respective geographic information using the history storing unit 73.

Further, the context management server 7 computes location information such as the moving speed and the moving direction of the GPS mobile phone 2 and the GPS mobile phone 2' based on respective next location data that will be sent at the current frequency and respective location data that has been stored, and stores them respectively using the history storing unit 73.

Next, a group managing unit 76 of the context management server 7 conducts a survey to detect which group each of the GPS mobile phone 2 and the GPS mobile phone 2' belongs to. For example, the group managing unit 76 judges whether the GPS mobile phone 2 and the GPS mobile phone 2' belong to the same group by checking similarity of the location data and the location information which are stored by using the history storing unit 73.

Here, the above shows merely an example of survey methods, and any other methods can be employed. Further, when the GPS mobile phone 2 and the GPS mobile phone 2' do not belong to the same group, the subsequent processes will be carried out separately for each of the GPS mobile phone 2 and the GPS mobile phone 2' in the way described in the first embodiment.

Next, the context management server 7 extracts context from the context database 4 using the geographic information and the location information of the GPS mobile phone 2 as a key by the context obtaining unit 74, and stores using the history storing unit 73.

When it is judged the GPS mobile phone 2 and the GPS mobile phone 2' belong to the same group, the context search from the context database 4 is not carried out for the GPS mobile phone 2'.

Next, the context management server 7 extracts providing information, a providing method, a providing destination, and notification frequency from the providing information database 5 using the extracted context of the GPS mobile phone 2 as a key, and stores the notification frequency using the history storing unit 73.

Here, in the present embodiment, since the GPS mobile phone 2 and the GPS mobile phone 2' belong to the same group, the GPS mobile phone 2 is used for an information delivery gateway of the GPS mobile phone 2' .

Because of this, the following process will be carried out. Here, "the information delivery gateway" delivers information sent from a certain network to devices of another network.

First, the group managing unit 76 of the context management server 7 sends control information that indicates the GPS mobile phone 2 as the information delivery gateway to the GPS mobile phone 2' by the server communicating unit 71. Further, the group managing unit 76 sends control information that indicates the GPS mobile phone 2 as the information delivery gateway to the GPS mobile phone 2 by the server communicating unit 71.

The terminal communicating unit 22 of the GPS mobile phone 2' receives the control information from the group managing unit 76 of the context management server 7. Further, the GPS mobile phone 2' checks the received control information, judges that this is indication of the information delivery gateway, and connects communication with the GPS mobile phone 2 by the terminal local communicating unit 23 according to the judged result.

Here, although the GPS mobile phone 2 is connected at this timing, the connection can be at any timing before the GPS mobile phone 2 and the GPS mobile phone 2' start communication, such that the connection is automatically done at a timing when the GPS mobile phone 2 and the GPS mobile phone 2' enter a certain area, and also the connection can be done in any connecting method.

Further, here, although the information delivery gateway unit 9 is mounted on both of the GPS mobile phone 2 and the GPS mobile phone 2', it is sufficient to have one information delivery gateway in the same group.

In such a case, the GPS mobile phone 2 needs to show the context management server 7 that the GPS mobile phone 2 is the information delivery gateway. In order to do this, the GPS mobile phone 2 sends the context management server 7 information showing that the GPS mobile phone 2 is the information delivery gateway, and the context management server 7 which receives this information needs only to manage the information. This can be easily implemented.

The GPS mobile phone 2' sends the GPS mobile phone 2 control information for requesting to start information delivery by the terminal local communicating unit 23.

The terminal local communicating unit 23 of the GPS mobile phone 2 receives the control information from the GPS mobile phone 2'. The GPS mobile phone 2 checks the received control information, judges this as a request to start information delivery, and starts communication with the GPS mobile phone 2' by the information delivery gateway unit 9 based on the judged result.

Here, since information has not been sent from the information delivery server 6 to the GPS mobile phone 2, the information delivery gateway unit 9 cannot deliver the information to the GPS mobile phone 2'. If the GPS mobile phone 2 has received the information from the information delivery server 6, and the GPS mobile phone 2' joins in such circumstances, the information delivery gateway unit 9 can deliver the information to the GPS mobile phone 2' immediately at this point.

On the other hand, the context management server 7 compares the notification frequency that has been extracted earlier and the notification frequency stored in the history. When they do not match, the context management server 7 sends each of the GPS mobile phone 2 and the GPS mobile phone 2' control information for requesting to update the notification frequency by the server communicating unit 71.

Each terminal communicating unit 22 of the GPS mobile phone 2 and the GPS mobile phone 2' receives the control information from the context management server 7. Further, the GPS mobile phone 2 and the GPS mobile phone 2' check the received control information, judge this as a request to update the notification frequency, and change the notification frequency based on the judged result.

On the other hand, using the GPS mobile phone 2 as the information delivery gateway, the context management server 7 delivers the information only to the GPS mobile phone 2. Because of this, the information delivery is requested from the information delivery server 6 by specifying the providing information which has been extracted earlier as providing information, a unicast delivery as a providing method, and the GPS mobile phone 2 as a providing destination.

Next, the information delivery server 6 delivers the information according to the contents requested by the context management server 7.

The terminal communicating unit 22 of the GPS mobile phone 2 receives the information sent by the information delivery server 6. Further, the GPS mobile phone 2 checks the received information, judges this as information based on the status, and provides the user object with the information based on the judged result.

Further, the information delivery gateway unit 9 of the GPS mobile phone 2 sends the received information to the GPS mobile phone 2', from which the request to start the information delivery has been received.

In the above way, by controlling the notification frequency of data according to the context, when plural GPS mobile phones exist under the same status, by sending the information to only one of the GPS mobile phones, and the one by delivering the information to the others of the plural GPS mobile phones, it is possible to reduce the load of the server and the increase of the network cost, and also possible to grasp the context and to deliver information based on the context.

As described above, the context grasping system of this embodiment is a system in which the GPS mobile phone 2 that can extract location data of itself and has a function of the information delivery gateway being able to deliver the information to another GPS mobile phones 2' and the server 19 which provides the information based on the context of the GPS mobile phone 2 are connected to the network.

Then, it is characterized in that the GPS mobile phone 2 of the context grasping system of the embodiment sends the extracted location data to the server 19, and the server 19 extracts context of the GPS mobile phone 2 based on the geographic information corresponding to the sent location data and the location information computable from the location data sent successively.

Further, it is characterized in that when there are plural GPS mobile phones of the same context, the server 19 specifies an information delivery gateway to the GPS mobile phone 2' other than the GPS mobile phone 2 which is used for the information delivery gateway, and after that the GPS mobile phone 2' which is not the information delivery gateway receives the information from the information delivery gateway.

Further, it is characterized in that the server 19 sends the GPS mobile phone the notification frequency of the location data corresponding to the context, the GPS mobile phone sends the location data at the sent notification frequency, the server 19 determines providing information, a providing method, and a providing destination based on the context and delivers the information of the determined contents to the information delivery gateway (the GPS mobile phone 2), and the information delivery gateway provides the GPS mobile phone 2' which is not the information delivery gateway with the information.

Further, the present embodiment is characterized in that the GPS mobile phones are mutually connected by a local network.

Here, in the embodiment, as well as the first embodiment, the GPS mobile phone 2 can send the server 19 the location information computed from the extracted location data and the successively extracted location data.

Further, in the embodiment, as well as the first embodiment, the server 19 can store the notification frequency, and the server 19 can send to the GPS mobile phone 2 only when the stored notification frequency differs from the notification frequency corresponding to the context.

Further, in the embodiment, as well as the first embodiment, the GPS mobile phone 2 can extract the location data at a timing corresponding to the notification frequency.

Further, in the embodiment, as well as the first embodiment, a set of plural pieces of location data, the number of which corresponding to the notification frequency, or a set of location data and location information sent from the GPS mobile phone 2 to the server 19 can be compressed.

Further, in the embodiment, as well as the first embodiment, geographic information, context, providing information, a providing method, a providing destination, and notification information can be extracted from the databases connected to the server 19.

Further, in the embodiment, as well as the first embodiment, geographic information, context, providing information, a providing method, a providing destination, and notification information can be extracted from the databases connected to the network.

### Embodiment 3.

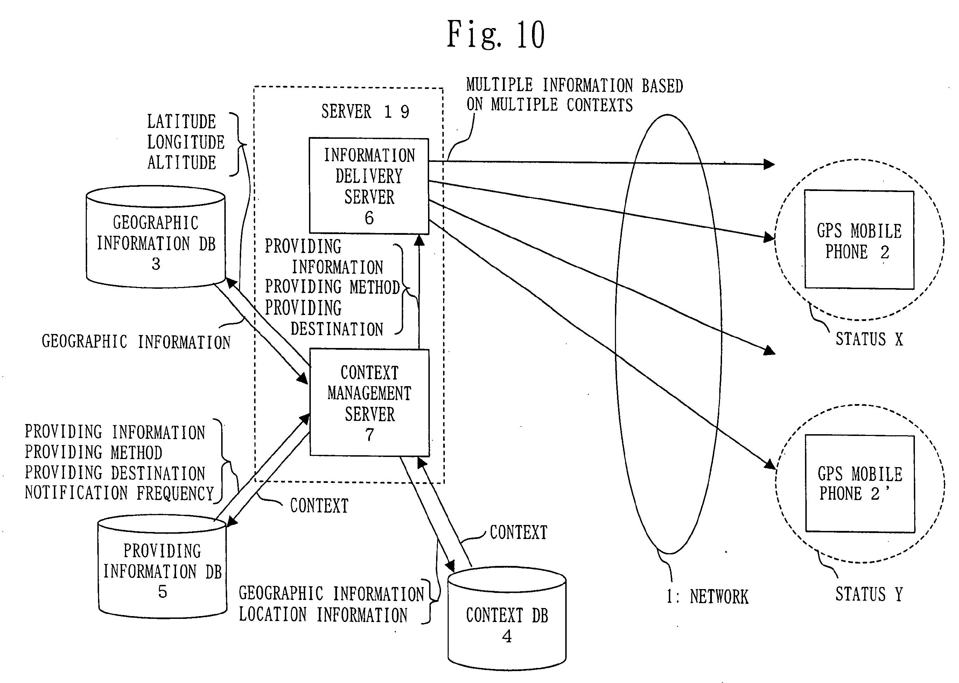

Fig. 10 shows a configuration of a context grasping system according to the third embodiment of the invention.

A network 1 through a context management server 7 are the same as ones in the first embodiment.

In the third embodiment, different points from the first embodiment will be mainly explained. In particular, the third embodiment is different in that a GPS mobile phone 2 does not need to send location data of the GPS mobile phone 2 to a server 19 on the network 1.

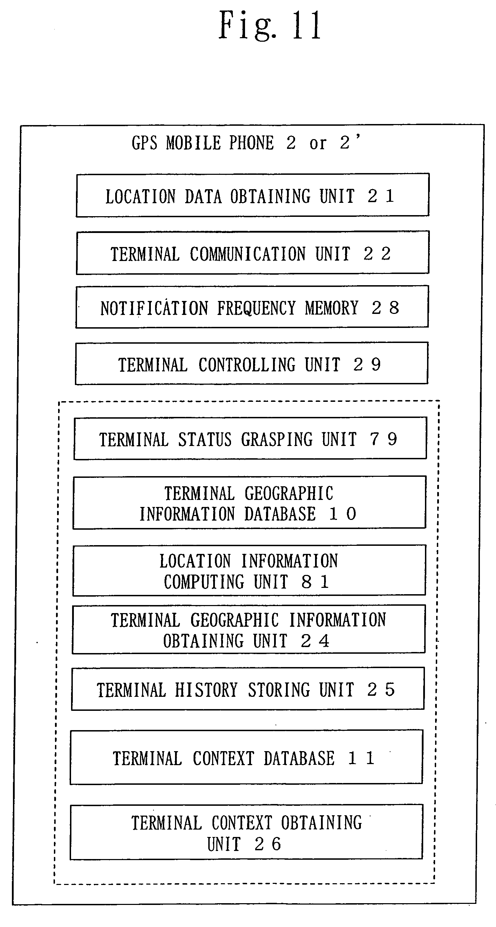

Fig. 11 shows a configuration of the GPS mobile phone 2 according to the present embodiment. A location data obtaining unit 21, a terminal communicating unit 22, a notification frequency memory 28, and a terminal controlling unit 29 are the same as ones in the first embodiment.

A terminal status grasping unit 79 grasps status of the GPS mobile phone 2 in the GPS mobile phone 2.

A terminal geographic information database 10 is a database from which geographic information can be extracted based on latitude, longitude, and altitude to specify a certain place.

A terminal context database 11 is a terminal context database from which context can be extracted based on location information and geographic information.

A terminal geographic information obtaining unit 24 extracts geographic information from the terminal geographic information database 10 using location data extracted from a location data obtaining unit 21.

A terminal history storing unit 25 stores history of various information such as location data, geographic information, location information, and context.

A location information computing unit 81 computes location information based on history of location data.

A terminal context obtaining unit 26 extracts context from the terminal context database 11 using geographic information and location information.

Configurations of a context management server 7 and an information delivery server 6 are the same as ones in the first embodiment.

The above is a configuration of the present embodiment.

Hereinafter, implementing procedure will be explained for providing information based on the context of the GPS mobile phone and for reducing the load of the server and the network, in which a GPS mobile phone estimates the context by itself from the location information extracted by itself, in which the information delivery server 6 broadcasts plural information based on plural contexts, and in which a GPS mobile phone extracts information corresponding to the context estimated by itself.

First, the GPS mobile phone 2 extracts location data of itself by the location data obtaining unit 21.

Further, the terminal status grasping unit 79 of the GPS mobile phone 2 extracts geographic information from the terminal geographic information database 10 using the location data as a key by the terminal geographic information obtaining unit 24.

Further, the terminal status grasping unit 79 stores the location data and the extracted geographic information using the terminal history storing unit 25.

Further, a location information computing unit 81 computes location information such as a moving speed and moving direction based on the location data which will be extracted next and the stored location data, and stores using a terminal history storing unit 25.

Further, a terminal status grasping unit 79 extracts context from the terminal context database 11 using the geographic information and the location information as a key by a terminal context obtaining unit 26, and stores the extracted context using the terminal history storing unit 25.

Here, although the geographic information and the context information are extracted from the terminal geographic information database 10 and the terminal context database 11 of the GPS mobile phone 2, each information can be also extracted from databases connected to the network 1.

In this case, even if each database of the GPS mobile phone stores little information, the reliability of each information can be improved by using an external database, and further it is possible to extract the information in a high speed according to the performance of the GPS mobile phone.

On the other hand, the context management server 7 delivers plural pieces of information based on plural contexts at instruction of an administrator (not shown in the figure) by the information delivery server 6. Any method can be applied for an instructing method such as instructions from a console or a remote, and a set file, etc.

The following shows examples of instruction from the administrator.

### ● Example 1

Information related to certain location data (geographic information) is provided. For example, information such as a latitude X and a longitude Y is provided. Or, information related to the current place (downtown, a building, a station, etc.) is provided, for example.

### ● Example 2

Information related to certain location information is provided. For example, information of downtown, a building, a station, etc. located in the moving direction is provided.

### ● Example 3

Information based on plural contexts is provided.

For example, the processing for the above example 1 will be as follows:

First, the context management server 7 extracts geographic information from the geographic information database 3 by the geographic information obtaining unit 72. Further, context is extracted from the context database 4 using the geographic information as a key by the context obtaining unit 74. At this time, since context to be extracted cannot be determined specifically based on only geographic information, plural contexts are extracted.

Further, for each of the extracted contexts, providing information, a providing method, and a providing destination are extracted using the contexts as a key by the providing information obtaining unit 75.

Then, the context management server 7 requests the information delivery server 6 to deliver information by specifying the providing information and broadcasting as the providing method for each of the extracted providing information.

Here, broadcasting is conducted regardless of the extracted providing method or the extracted providing destination; however, the information can be delivered by the extracted providing method to the extracted providing destination. '

Further, it is also possible to store different providing methods and different providing destinations respectively for normal operation and broadcasting operation in the providing information database 5.

Further, although providing information is extracted and the information delivery is requested for each of the extracted plural contexts here, it is also possible to limit the number at random or by using a priority set in the context, etc.

Or, the processing for the above example 2 will be as follows, for example.

First, the context management server 7 extracts context from the context database 4 using the location information as a key by the context obtaining unit 74. At this time, since context to be extracted cannot be determined specifically based on only location information, plural contexts are extracted.

Further, for each of the extracted contexts, providing information, a providing method, and a providing destination are extracted using the contexts as a key by the providing information obtaining unit 75.

Then, the context management server 7 requests the information delivery server 6 to deliver information by specifying the providing information and broadcasting as the providing method for each of the extracted providing information.

Or, the processing for the above example 3 will be as follows, for example.

First, the context management server 7 extracts providing information, a providing method, and a providing destination, for each of the indicated plural contexts, by the providing information obtaining unit 75, using the contexts as a key. Then, the context management server 7 requests the information delivery server 6 to deliver information by specifying the providing information and broadcasting as the providing method for each of the extracted providing information.

Next, the information delivery server 6 delivers the information according to the contents requested by the context management server 7.

Here, the information delivery server 6 broadcasts to the network 1; however, it is also possible to conduct broadcasting using satellites (not shown in the figure) instead of the information delivery server 6.

The terminal communicating unit 22 of the GPS mobile phone 2 receives plural information based on the plural contexts sent by the information delivery server 6.

Further, the GPS mobile phone 2 checks the received plural information based on the plural contexts and extracts information which matches the context that has been stored previously. Then, the extracted information is provided the user object.

In the above way, it is possible to deliver the information based on the context even if the server 19 cannot obtain the information of the GPS mobile phone 2.

As has been discussed, the context grasping system of the embodiment is characterized in that the GPS mobile phone 2 that can extract the location information of itself and the server 19 which provides plural information based on plural contexts are connected to the network in a system.

Further, it is characterized that the GPS mobile phone 2 of the context grasping system of the embodiment extracts the context from the geographic information corresponding to the extracted location data and the location information computable from the successively extracted location data, the server 19 delivers plural information based on plural contexts, and the GPS mobile phone 2 extracts the information which matches the context of itself from the plural information based on the plural contexts sent through the network.

Further, the context grasping system of the embodiment is characterized in that the GPS mobile phone 2 extracts the context based on the geographic information corresponding to the extracted location data and the location information computed from the successively extracted location data, the server 19 delivers plural information based on plural contexts by broadcasting, and the GPS mobile phone 2 extracts the information which matches the context of itself from the received plural information based on the plural contexts.

Further, the embodiment is characterized in that geographic information and context are extracted from a built-in database of the GPS mobile phone 2.

Further, the embodiment is characterized in that geographic information and context are extracted from a database connected to the network.

Further, the embodiment is characterized in that information delivered from the server 19 is plural information based on plural context related to specific location data.

Further, the embodiment is characterized in that information delivered from the server 19 is plural information based on plural context related to specific geographic information.

Further, the embodiment is characterized in that information delivered from the server 19 is plural information based on plural context related to specific location information.

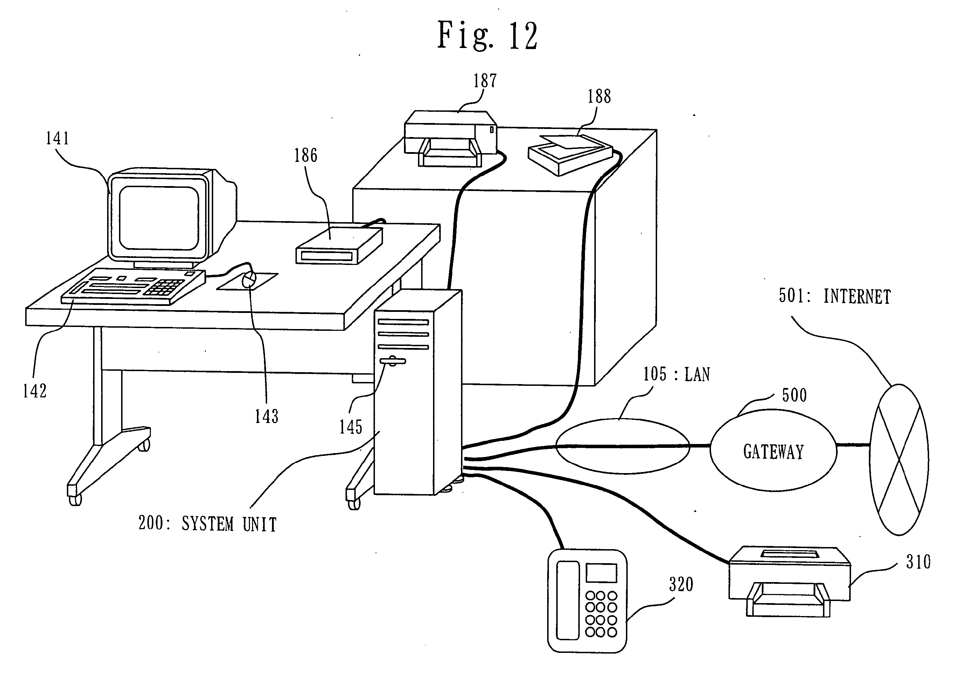

Fig. 12 shows an example of an outer appearance of the context management server 7, the information delivery server 6, or the server 19 in respective embodiments.

In Fig. 12, the context management server 7, the information delivery server 6, or the server 19 includes a system unit 200, a CRT (Cathode Ray Tube) display unit 141, a keyboard (K/B) 142, a mouse 143, a compact disk drive (CDD) 186, a printer 187, and a scanner 188, and these are connected by a cable.

Further, the context management server 7, the information delivery server 6, or the server 19 is connected to a FAX machine 310 and a telephone 320 by a cable, and further, is connected to the Internet 501 through a local area network (LAN) 105 and a gateway 500.

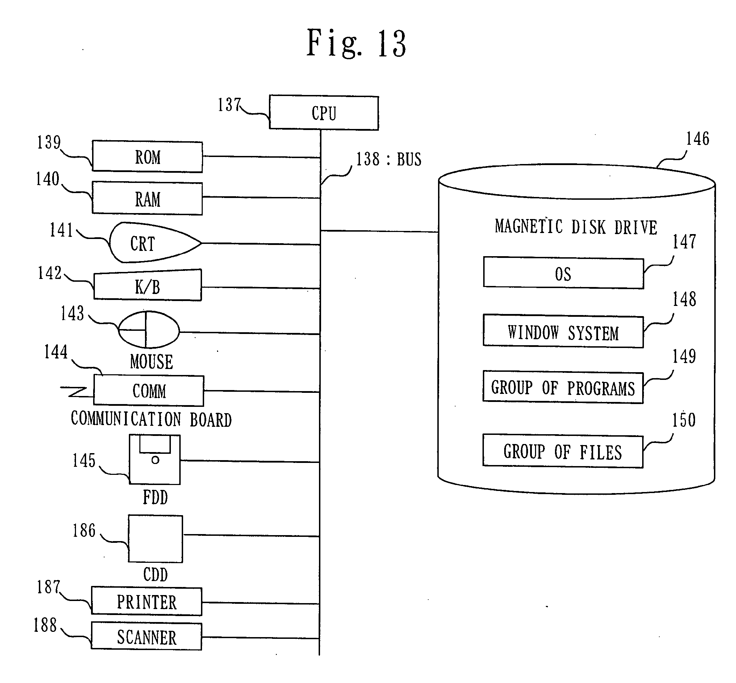

Fig. 13 shows an example of hardware configuration of the context management server 7, the information delivery server 6, or the server 19 in the respective embodiments.

In Fig. 13, the context management server 7, the information delivery server 6, or the server 19 includes a CPU (Central Processing Unit) 137. The CPU 137 is connected to a ROM 139, a RAM 140, a communication board 144, a CRT display unit 141, a K/B 142, a mouse 143, an FDD (Flexible Disk Drive) 145, a magnetic disk drive 146, a CDD 186, a printer 187, and a scanner 188 through the bus 138.

The RAM is an example of a volatile memory. The ROM, the FDD, the CDD, and the magnetic disk drive are examples of non-volatile memories. These are examples of a storage apparatus or a memory unit.

The communication board 144 is connected to the FAX machine 310, the telephone 320, the LAN 105, etc.

For example, the communication board 144, the K/B 142, the FDD 145, and the scanner 188 are examples of an inputting unit.

Further, the communication board 144, the CRT display unit 141, etc., are examples of an outputting unit, for example.

Here, in Fig. 13, the communication board can be connected not only to the LAN 105 but also directly to the Internet or WAN (Wide Are Network) such as ISDN, etc. In case of being directly connected to the Internet or WAN such as ISDN, etc., it is connected to the Internet or WAN such as ISDN, etc. and a web server 500 becomes unnecessary. Further, the communication board can be connected to a radio base station.

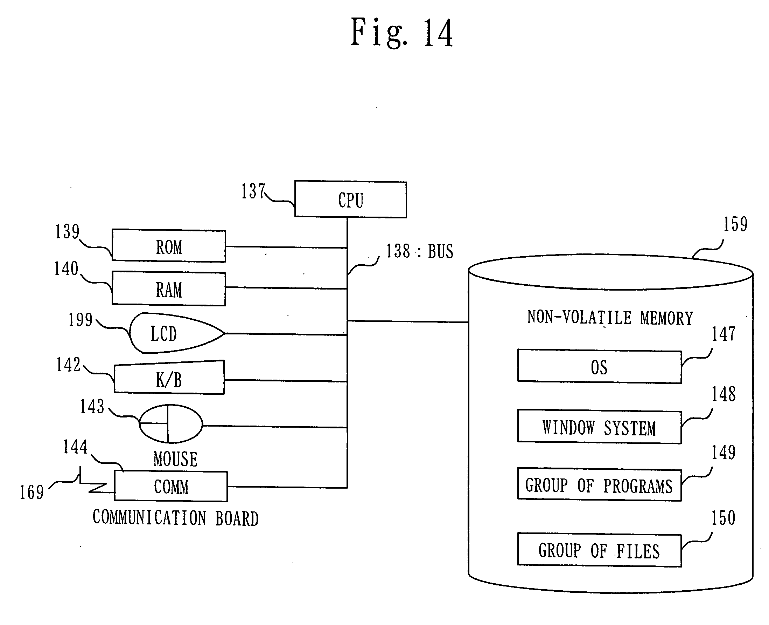

Fig. 14 shows an example of hardware configuration of the GPS mobile phone 2 of each embodiment.

In Fig. 14, the GPS mobile phone 2 includes a CPU (Central Processing Unit) 137 for executing programs. The CPU 137 is connected to a ROM 139, a RAM 140, a communication board 144, an LCD display unit 199, and a K/B 142 through a bus 138.

The RAM is an example of a volatile memory. The ROM is an example of non-volatile memory. These are examples of a storage apparatus or a memory unit.

The communication board 144 is connected to an antenna 169.

For example, the communication board 144, the K/B 142, and the scanner 188, etc. are examples of an inputting unit.

Further, for example, the communication board 144 and the LCD display unit 141 are examples of an outputting unit.

Here, in Figs. 13 and 14, the magnetic disk drive 146 or a non-volatile memory 159 stores an operating system (OS) 147, a window system 148, a group of programs 149, and a group of files 150. The group of programs is executed by the CPU 137, the OS 147, and the window system 148.

The above group of programs 149 stores programs for implementing functions which have been explained as "some unit" in each explanation of the embodiments. The programs are read and executed by the CPU.

The group of files 150 stores information or data which has been explained as "some file" in each explanation of the embodiments.

Further, recording mediums such as the ROM, the RAM, the non-volatile memories, etc. store information or data which has been explained in each explanation of the embodiments. In another way, it is transmitted by radio or transmission medium such as a signal line, etc.

Further, "some unit" which has been explained in each explanation of the embodiments can be implemented by firmware stored in the ROM 139. In another way, it can be implemented by only software, only hardware, a combination of software and hardware, or a combination further with firmware.

Further, the programs for implementing each of the embodiments can be stored in a recording apparatus of recording medium such as a ROM, a RAM, a non-volatile memory, etc.

### Industrial Applicability

As has been discussed, according to the present invention, the information providing system in which the server 19 provides information according to the status of the mobile terminal can be obtained.

Further, the load of the server can be reduced by decreasing the number of communication from the mobile terminal to the server 19.

Further, the mobile terminal can receive information provided from the server 19 even if there is no communication from the mobile terminal to the server 19.

### Brief Explanation of the Drawings

[Fig. 1] Fig. 1 shows a context grasping system according to the first embodiment.
[Fig. 2] Fig. 2 shows a GPS mobile phone 2 according to the first embodiment.
[Fig. 3] Fig. 3 shows a context management server 7 according to the first embodiment.
[Fig. 4] Fig. 4 shows an information delivery server 6 according to the first embodiment.
[Fig. 5] Fig. 5 shows a history storing unit 73 according to the first embodiment.
[Fig. 6] Fig. 6 is a flowchart showing operation of the context grasping system according to the first embodiment.
[Fig. 7] Fig. 7 shows a context grasping system according to the second embodiment.
[Fig. 8] Fig. 8 shows a GPS mobile phone 2 according to the second embodiment.
[Fig. 9] Fig. 9 shows a context management server 7 according to the second embodiment.
[Fig. 10] Fig. 10 shows a context grasping system according to the third embodiment.
[Fig. 11] Fig. 11 shows a GPS mobile phone 2 according to the third embodiment.
[Fig. 12] Fig. 12 shows a configuration of a server device.
[Fig. 13] Fig. 13 shows a hardware structure of the server
[Fig. 14] Fig. 14 shows a hardware structure of the GPS mobile phone 2

## Claims

1. A mobile terminal communicating with a server comprising:
a location data obtaining unit obtaining location data;
a notification frequency memory storing notification frequency;
a terminal communicating unit communicating with the server;
a terminal controlling unit receiving the notification frequency from the server by the terminal communicating unit, updating the notification frequency stored in the notification frequency memory, and sending the location data obtained by the location data obtaining unit to the server at the notification frequency stored in the notification frequency memory by the terminal communicating unit.

2. A server communicating with a mobile terminal comprising:
a server communicating unit receiving location data of the mobile terminal;
a terminal status grasping unit grasping status of the mobile terminal using the location data of the mobile terminal received by the server communicating unit;
a providing information obtaining unit obtaining notification frequency to be provided to the mobile terminal based on the status of the mobile terminal grasped by the terminal status grasping unit; and
a notification frequency sending unit sending the notification frequency obtained by the providing information obtaining unit to the mobile terminal.

3. A server,
wherein the terminal status grasping unit includes:
a history storing unit storing a history of location data of a mobile terminal;
a location information computing unit obtaining a moving speed and moving direction of the mobile terminal as location information using the history of the location data of the mobile terminal:
a geographic information obtaining unit searching a geographic information database storing geographic information using the location data of the mobile terminal received by the server communicating unit, and obtaining geographic information of a place where the mobile terminal exists; and
a context obtaining unit obtaining context of the mobile terminal by searching a context database storing status of the mobile terminal as context using the location information computed by the location information computing unit and the geographic information obtained by the geographic information obtaining unit, and outputting as status of the mobile terminal.

4. An information providing system, in which a server and a mobile terminal communicate, and the server provides information to the mobile terminal, wherein
the mobile terminal comprising:
a location data obtaining unit obtaining location data;
a notification frequency memory storing notification frequency;
a terminal communicating unit communicating with the server; and
a terminal controlling unit receiving the notification frequency from the server by the terminal communicating unit, updating the notification frequency stored in the notification frequency memory, sending the location data obtained by the location data obtaining unit at the notification frequency stored in the notification frequency memory to the server by the terminal communicating unit, and receiving information provided from the server by the terminal communicating unit, and
the server comprising:
a server communicating unit receiving the location data of the mobile terminal:
a terminal status grasping unit grasping status of the mobile terminal using the location data of the mobile terminal received by the server communicating unit;
a providing information obtaining unit obtaining information and notification frequency to be provided to the mobile terminal based on the status of the mobile terminal grasped by the terminal status grasping unit;
a notification frequency sending unit sending the notification frequency obtained by the providing information obtaining unit to the mobile terminal; and
an information delivering unit delivering the information obtained by the providing information obtaining unit.

5. The mobile terminal of claim 1, further comprising:
a history storing unit storing a history of the location data of the mobile terminal; and
a location information computing unit obtaining a moving speed and moving direction of the mobile terminal as location information by the history of the location data of the mobile terminal,
wherein the terminal controlling unit sends the location information to the server.

6. The mobile terminal of claim 1, further comprising
an information delivery gateway unit delivering the information provided from the server received by the terminal communicating unit to other mobile terminal.

7. The server of claim 2, further comprising
a group managing unit grouping a plurality of mobile terminals in a same status, setting one mobile terminal out of the plurality of mobile terminals in the same group as an information delivery gateway delivering the information to other mobile terminals, and notifying the other mobile terminals of the one mobile terminal as the information delivery gateway.

8. A mobile terminal communicating with a server comprising:
a location data obtaining unit obtaining location data;
a terminal status grasping unit grasping status of the mobile terminal using the location data obtained by the location data obtaining unit;
a terminal communicating unit communicating with the server; and
a terminal controlling unit receiving providing information provided from the server by the terminal communicating unit, selecting and utilizing providing information that suits the status of the mobile terminal grasped by the terminal status grasping unit out of the providing information.

9. A server communicating with a mobile terminal comprising:
a geographic information obtaining unit searching a geographic information database storing geographic information, and obtaining geographic information;
a context obtaining unit searching a context database storing status of the mobile terminal as context using the geographic information obtained by the geographic information obtaining unit, obtaining context of the mobile terminal, and outputting as the status of the mobile terminal;
a providing information obtaining unit obtaining information to be provided to the mobile terminal based on the status of the mobile terminal obtained by the context obtaining unit; and
an information delivering unit delivering the information obtained by the providing information obtaining unit.

10. An information providing system, in which a server and a mobile terminal communicate and the server provides information to the mobile terminal, wherein:
the mobile terminal comprising:
a location data obtaining unit obtaining location data;
a terminal status grasping unit grasping status of the mobile terminal using the location data obtained by the location data obtaining unit;
a terminal communicating unit communicating with the server; and
a terminal controlling unit receiving providing information provided from the server by the terminal communicating unit, selecting and utilizing providing information that suits the status of the mobile terminal grasped by the terminal status grasping unit out of the providing information, and
the server comprising:
a geographic information obtaining unit searching a geographic information database storing geographic information, and obtaining geographic information;
a context obtaining unit searching a context database storing status of the mobile terminal as context using the geographic information obtained by the geographic information obtaining unit, obtaining context of the mobile terminal, and outputting as the status of the mobile terminal;
a providing information obtaining unit obtaining information to be provided to the mobile terminal based on the status of the mobile terminal obtained by the context obtaining unit; and
an information delivering unit delivering the information obtained by the providing information obtaining unit.

11. A communicating method of a mobile terminal communicating with a server comprising:
obtaining location data;
storing notification frequency in a notification frequency memory;
receiving the notification frequency from the server, updating the notification frequency stored in the notification frequency memory, and
sending the location data obtained to the server at the notification frequency stored in the notification frequency memory.

12. A communicating method of a server communicating with a mobile terminal comprising:
receiving location data of the mobile terminal;
grasping status of the mobile terminal using the location data of the mobile terminal received;
obtaining notification frequency to be provided to the mobile terminal based on the status of the mobile terminal grasped; and
sending the notification frequency obtained to the mobile terminal.

13. An information providing method of an information providing system, in which a server and a mobile terminal communicate and the server provides information to the mobile terminal, the method comprising:
by the mobile terminal,
obtaining location data;
storing notification frequency in a notification frequency memory;
receiving the notification frequency from the server, updating the notification frequency stored in the notification frequency memory; and
sending the location data obtained to the server at the notification frequency stored in the notification frequency memory, and
by the server,
receiving the location data of the mobile terminal:
grasping status of the mobile terminal using the location data of the mobile terminal received;
obtaining information and notification frequency to be provided to the mobile terminal based on the status of the mobile terminal grasped;
sending the notification frequency obtained to the mobile terminal; and
delivering the information obtained to the mobile terminal.

14. A communicating method of a mobile terminal communicating with a server comprising:
obtaining location data;
grasping status of the mobile terminal using the location data obtained;
receiving providing information provided from the server, selecting and utilizing providing information that suits the status of the mobile terminal grasped out of the providing information.

15. A communicating method of a server communicating with a mobile terminal comprising:
searching a geographic information database storing geographic information, and obtaining geographic information;
searching a context database storing status of the mobile terminal as context using the geographic information obtained, and obtaining context of the mobile terminal as the status of the mobile terminal;
obtaining information to be provided to the mobile terminal based on the status of the mobile terminal obtained; and
delivering the information obtained.

16. An information providing method of an information providing system, in which a server and a mobile terminal communicate and the server provides information to the mobile terminal, the method comprising:
by the mobile terminal,
obtaining location data;
grasping status of the mobile terminal using the location data obtained; and
receiving providing information provided from the server, selecting and utilizing providing information that suits the status of the mobile terminal grasped out of the providing information, and
by the server,
searching a geographic information database storing geographic information, and obtaining geographic information;
searching a context database storing status of the mobile terminal as context using the geographic information obtained, and obtaining context of the mobile terminal as the status of the mobile terminal;
obtaining information to be provided to the mobile terminal based on the status of the mobile terminal obtained; and
delivering the information obtained.
